(19) Europäisches Patentamt
European Patent Office
Office européen des brevets

(11) EP 1 589 648 A2

(12) EUROPEAN PATENT APPLICATION

(43) Date of publication:
26.10.2005 Bulletin 2005/43

(51) Int Cl.⁷: H02M 3/335

(21) Application number: 04027057.1

(22) Date of filing: 15.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 22.04.2004 IT RE20040038

(71) Applicant: Ask Industries S.p.A.
I-42100 Reggio Emilia (IT)

(72) Inventors:
• Violi, Francesco
42049 S. Ilario d'Enza (Reggio Emilia) (IT)

• Franceschini, Giovanni
42100 Reggio Emilia (IT)
• Bellini, Alberto
47100 Forli a (IT)
• Lorenzani, Emilio
43054 Mezzo Inferiore (Parma) (IT)
• Cavatorta, Matteo
42100 Reggio Emilia (IT)

(74) Representative: Lecce, Giovanni
Dott. Giovanni Lecce & C. S.r.l.
Via Fratelli Ruffini, 9
20123 Milano (IT)

(54) A DC/DC three-phase converter

(57) A DC/DC three-phase converter is obtained replacing the one-phase transformer of a traditional switching amplifier with a three-phase transformer (1).

The DC/DC three-phase converter allows obtaining a reduction of the harmonic distortion of the continuous output signal of the feeder and a lower power loss on the transformer with the same power.

Fig. 2

EP 1 589 648 A2

**Description**

The present invention refers to a DC/DC three-phase converter.

As known the switching feeders are widely used in many consumer electronics fields.

The switching amplifiers have recently established thanks to their high efficiency and manufacturing inexpensiveness.

The push-pull architecture with a primary and a secondary one-phase transformer with a central plug is the most commonly used in switching technology for boost or step-up DC/DC converters.

In these kinds of solutions two MOSFETs (Metal Oxide Silicon Field Effect Transistor) serving as static switches are used. They alternatively make the battery current flow on the two windings of the primary thus producing a square wave voltage on the secondary of the transformer whose average value is null and the amplitude corresponds to the value of the continuous voltage required.

The conversion factor is imposed by the turn ratio.

The continuous output voltage is obtained rectifying the square wave with four diodes placed into the bridge configuration. This architecture operates within a frequency range comprised between 30 and 300 kHz.

It is also known that a drawback occurring in switching feeders of the above-mentioned type is due to the fact that the output continuous signal of the feeder shows an appreciable harmonic distortion.

Object of the present invention is to remove the above-mentioned drawback.

In its more general aspect, the present invention allows obtaining this and other purposes by a DC/DC three-phase converter wherein the one-phase transformer which is presently adopted is replaced by a three-phase transformer.

Taking advantage of the intrinsic features of a three-phase system, the harmonic distortion of the continuous output voltage of the feeder is reduced moving, according to the terms used in literature, from a so-called "push-pull" architecture to a "full-converter" one or full bridge converter.

Therefore, subject of the present invention is a DC/DC three-phase converter comprising a three-phase transformer with a triangular-configured primary winding and a star-configured secondary winding fed by a three-phase static power converter or inverter whose output is associated to a three-phase diode double half-wave bridge rectifier; said inverter being constituted by six MOSFETs generating VA0, VB0, VCO voltages which are put into sequence by a microcontroller and said three-phase diode double half-wave bridge being the secondary winding voltage rectifier of said transformer.

The invention is hereby described in detail with reference to one embodiment which is given only by way of non-limitative example, with reference to the attached drawings wherein:

Figure 1 shows a block diagram of the DC/DC three-phase converter according to the present invention;
Figure 2 shows a structural scheme of the DC/DC three-phase converter according to the invention;
Figure 3 shows the patterns of the voltages generated by the static power converter adopting the architecture with a three-phase transformer according to the invention;
Figure 4 shows the voltages linked on the primary winding;
Figure 5 shows the phase voltages to the secondary winding;
Figure 6 shows the magnetic induction in the three-phase transformer core;
Figure 7 shows the power spectrum of the output voltage (line a), with a current absorption from resistive load (line b).

With reference to the Figures, in the structure according to the present invention, the one-phase transformer is replaced by a three-phase transformer (1) which is fed by a three-phase static power converter (2) constituted by six MOSFETs.

The secondary winding voltages are rectified by a three-phase diode double half-wave bridge (3) moving from a push-pull architecture to a full-converter one.

The configuration choice of the primary and secondary windings of the transformer has a particular importance; a good choice is the primary winding triangular configuration and the secondary winding star configuration.

If the transformer is fed with square wave voltages, the following advantages are obtained:

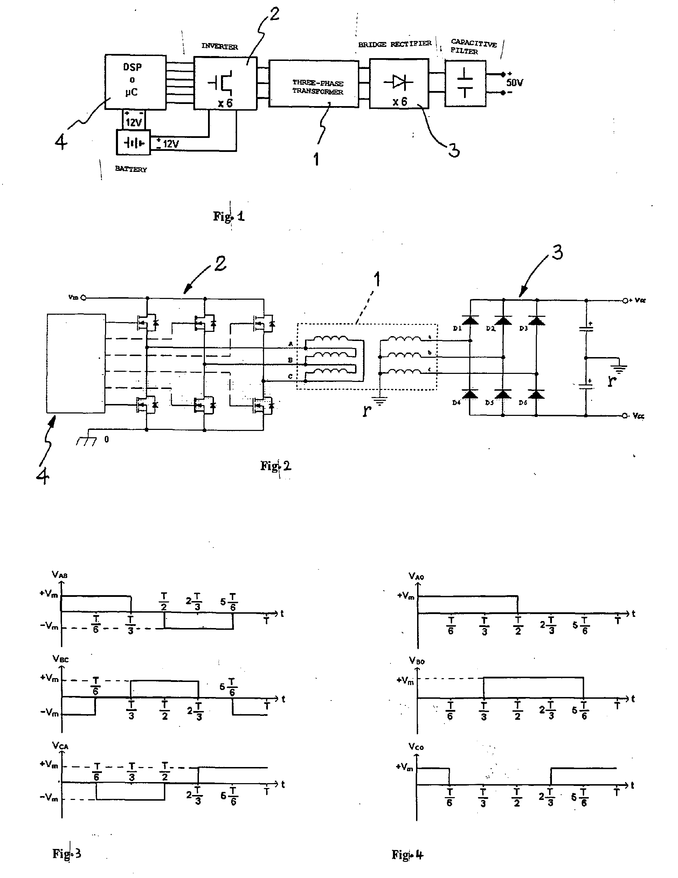

a) the triangular configuration of the primary winding allows the circulation of a current on the windings which is reduced of a factor two compared to the line currents generated by the static power converter (2). The power losses are thus reduced due to the Joule effect and/or the winding section can be reduced; this is a very important feature when high power "voltage boosts" wherein high currents circulate in the primary winding of the transformer are produced;
b) the star configuration of the secondary winding makes the star centre ( r ) available and allows obtaining the dual feeding (+ Vcc - Vcc) required by many applications,
c) the voltage gain corresponds to two, with a unit turn ratio between primary and secondary windings, i.e. with a primary winding feeding voltage corresponding to Vm, on the secondary winding a difference in potential corresponding to 2Vm (+Vm, - Vm) is obtained. This is due to the fact that it is imposed a phase voltage on the primary winding of the three-phase transformer (1) and it is detected a linked voltage on the secondary winding. This feature allows reducing the number of turns of a factor two on the secondary windings of the transformer. Figure 2 shows the circuit scheme of the whole system.

The three-phase transformer (1) which is created to be fed with a triad of sinusoidal voltages, in the architecture according to the present invention, is fed by a triad of square waves which are shifted among them of one third of their T period (Figure 3). The typical six step modulation which is already known in the art is obtained.

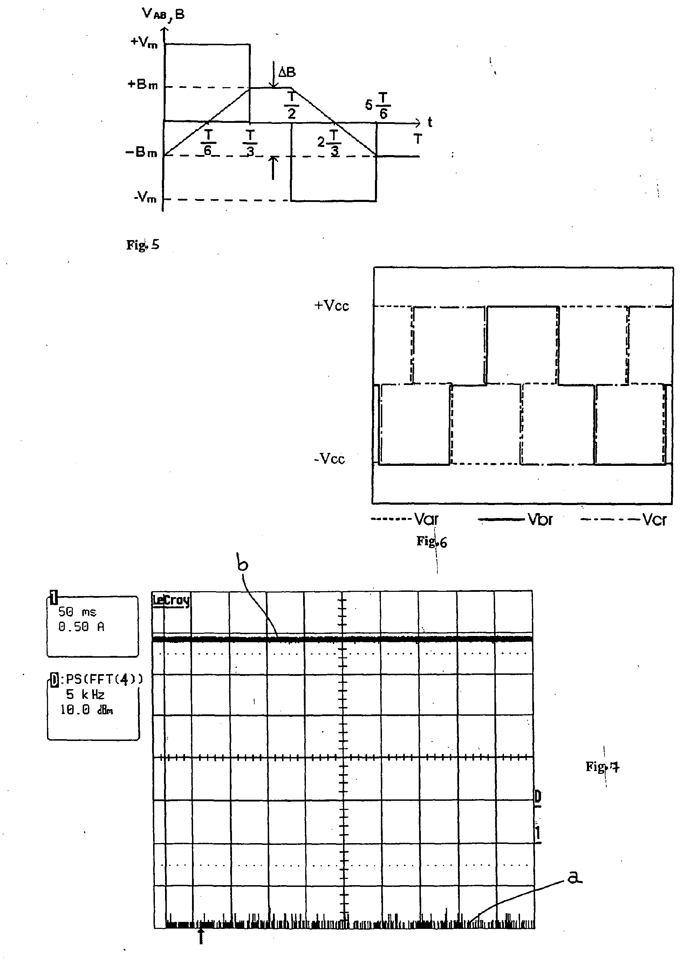

The VA0, VB0, VCO voltages are generated by the static power converter with an appropriate sequence generated by a microcontroller (4). Linked voltages coinciding with the voltages at the ends of each winding (Figure 4) correspond to these voltages. Thanks to the triangle-star configuration of the three-phase transformer (1) on the secondary winding, phase voltages having the same shapes as the voltages linked to the primary winding are obtained, but they are amplified in amplitude according to the turn ratio of the transformer. Figure 5 shows the wave shape of the secondary winding voltages.

Each of the three wave shapes Var, Vbr and Vcr remains at the positive voltage level (+Vcc) and at the negative one (-Vcc) for a time corresponding to one third of the period.

They represent a time sequence that allows obtaining positive and negative feeding voltages through the three-phase bridge rectifier (3). The continuity of the two voltage levels originated by the perfect contiguity of the three wave shapes can be noticed. Each diode of the bridge (3) is on for one third of the period of the wave shape (120 electrical degrees).

In the non-limitative example shown in Figure 2, the three diodes D1, D2, D3 of the upper part of the bridge take the positive voltage level, while the three diodes D4, D5, D6 of the lower part of the bridge take the negative voltage level.

The sizing of the three-phase transformer (1) is based on the well-known magnetic induction formula:

$$v_{AB}(t) = N_1 \cdot \frac{d\phi(t)}{dt} = N_1 \cdot A_e \cdot \frac{d\beta(t)}{dt}$$

wherein $N_1$ is the number of turns of the primary winding of the transformer (1), $A_e$ is the section of the core and $v_{AB}$ is the voltage imposed on a primary winding. Once the maximum magnetic induction $B_{max}$ imposed by the chosen core is defined, its maximum $\Delta B = 2 \cdot B_{max}$ excursion is also defined (Figure 6):

$$\Delta B = \frac{1}{N_1 \cdot A_e} \int_0^{\frac{T}{2}} v_{AB}(t) \cdot dt$$

By solving and expliciting the function ($\int$), the number of turns of the primary winding $N_1$ is obtained:

$$N_1 = \frac{V_m \cdot T}{N_1 \cdot A_e \cdot 3 \cdot (2 \cdot B_{max})}$$

according to the required rail voltage $V_{rail} = 2 \mid Vcc \mid$ the turn ratio is determined:

$$N_2/N_1 = \frac{V_{rail}}{2 \cdot V_m}$$

As previously said, the factor 2 derives from the choice of the triangle-star configuration for the three-phase transformer (1).

The architecture described has been tested with a prototype having an available input voltage of 12 Volt and a dual output voltage of +/- 30 Volt. Signals with frequencies in the [10-20 kHz] range have been chosen. These values are definitely lower than the ones which are usually used for the push-pull architectures.

The frequency reduction allows using smaller and inexpensive electrolytic capacities for the output filter of the converter. In Figure 7 the power spectrum of the voltage supplied by the converter with resistive load and a current emission corresponding to 2.4 Ampère is shown.

The invention has been described and shown according to an embodiment given by way of non-limitative example, therefore some changes to the schemes, components, combinations and ensembles will be clear to people skilled in the art and can be made without leaving the scope and the field of the present invention.

**Claims**

1. A DC/DC three-phase converter **characterized in that** it comprises a three-phase transformer (1) with a triangular-configured primary winding and a star-configured secondary winding fed by a three-phase static power converter or inverter (2) whose output is associated to a three-phase diode double half-wave bridge rectifier (3); said inverter being constituted by six MOSFETs generating VA0, VB0, VC0 voltages which are put into sequence by a microcontroller (4) and said three-phase diode double half-wave bridge (3) being the secondary winding voltage rectifier of said transformer (1).

**2.** The DC/DC three-phase converter according to claim 1, **characterized in that** it is constituted by a so called full-converter architecture or full bridge converter.

**3.** The DC/DC three-phase converter according to claim 1 or 2, **characterized in that** the triangular configuration of the primary winding of said transformer (1) makes a current reduced of a factor 2 circulate on windings, compared to the line currents generated by said three-phase static power converter with a reduction of the power losses due to the Joule effect and a reduction of winding sections.

**4.** The DC/DC three-phase converter according to claim 1 or 2, **characterized in that** the star configuration of the secondary winding of said transformer (1) makes the star centre (r) available with dual feeding (+ Vcc-Vcc).

**5.** The DC/DC three-phase converter according to anyone of the previous claims, **characterized in that** the three-phase transformer (1) is fed by a triad of square waves which are shifted among them of one third of their T period.

**6.** The DC/DC three-phase converter according to anyone of the previous claims, **characterized in that** linked voltages coinciding with the ones at the ends of each winding correspond to the said VA0, VB0, VC0 voltages which are generated by the static power converter (2) and put into sequence by said microcontroller (4).

**7.** The DC/DC three-phase converter according to anyone of the previous claims, **characterized in that** each of the three Var, Vbr and Vcr wave shapes of the secondary winding voltages of said transformer (1) remains at the positive voltage level (+Vcc) and at the negative one (-Vcc) for time corresponding to one third of the period; said wave shapes represent the time sequence determining the positive and negative feeding voltages through said three-phase bridge rectifier (3).

**8.** The DC/DC three-phase converter according to anyone of the previous claims, **characterized in that** depending on the triangle-star configuration of the three-phase transformer (1), phase voltages with the same shape as the voltages linked to the primary winding amplified in amplitude depending on the transformer turn ratio are obtained on the secondary winding of the same transformer.

**9.** The DC/DC three-phase converter according to anyone of the previous claims, **characterized in that** each diode of said three-phase bridge rectifier (3) is on for one third of the wave shape period (120 electrical degrees).

Fig. 1

Fig. 2

Fig. 3

Fig. 4

Fig. 5

+Vcc

-Vcc

------ Var ──── Vbr ─·─·─ Vcr

Fig. 6

| 50 ms |
| 0.50 A |

| D:PS(FFT(4)) |
| 5 kHz |
| 10.0 dBm |

LeCroy

b

a

D
1

Fig. 7